Europäisches Patentamt

European Patent Office

Office européen des brevets

(11) Publication number: **0 426 332 A2**

# EUROPEAN PATENT APPLICATION

(21) Application number: 90311378.5

(22) Date of filing: 17.10.90

(51) Int. Cl.⁵: **G08B 13/00**

(30) Priority: 02.11.89 GB 8924743

(43) Date of publication of application:
08.05.91 Bulletin 91/19

(84) Designated Contracting States:
AT BE CH DE DK ES FR GR IT LI LU NL SE

(71) Applicant: **SECURITY ALERT LIMITED**
**Pug House, 2 Waterlow Road**
**Reigate, Surrey(GB)**

(72) Inventor: **Leck, James Harper**
**Pug House, 2 Waterlow Road**
**Reigate, Surrey(GB)**

(74) Representative: **Heath, Peter William Murray**
**FRY HEATH & CO. St. Georges House 6**
**Yattendon Road**
**Horley Surrey RH6 7BS(GB)**

(54) Electronic systems for the protection of articles.

(57) An electronic system for monitoring a predetermined number of articles and a method of operating the same in which the system comprises a primary radio transceiver mounted in or otherwise closely associated with each article to be monitored having programmed therein code digits unique to that article; a control computer apparatus separate from the articles arranged to carry details of the articles to be monitored including each set of unique code digits, and being provided with means for storing the unique code digits of articles embraced by the system nominated as stolen, and having associated therewith a secondary transceiver; the control computer apparatus and the secondary transceiver including means for radio transmitting at predetermined intervals the unique code digits of articles nominated as missing, and each primary transceiver being provided with means for responding to the transmission of its unique code digits with the radio transmission of those same code digits, the control computer apparatus having means whereby on receipt of those same code digits by the secondary transceiver, the apparatus produces details of the article transmitting those unique code digits. The primary transducer may include alarm means which, on actuation, transmits its unique code of digits.

Fig.1.

EP 0 426 332 A2

## ELECTRONIC SYSTEMS FOR THE PROTECTION OF ARTICLES

This invention relates to an electronic system for the protection of articles.

With the ever increasing rate of theft of and from, and damage to substantial sized and valuable articles, such as pleasure boats, there has been an increasing need to provide an adequate system for detecting and locating such items stolen, or being interfered with or misused without the consent of the owner, to provide real substantial assistance to civic authorities in their attempts to cope with this ever increasing problem.

It is an object of the present invention to provide an electronic system capable of meeting to a most substantial extent this need.

In accordance with one aspect of the present invention there is provided an electronic system for monitoring a predetermined number of articles, comprising a primary radio transceiver mounted in or otherwise closely associated with each article to be monitored having programmed therein code digits unique to that article; a control computer apparatus separate from the articles arranged to carry details of the articles to be monitored including each set of unique code digits, and being provided with means for storing the unique code digits of articles embraced by the system nominated as stolen, and having associated therewith a secondary transceiver; the control computer apparatus and the secondary transceiver including means for radio transmitting at predetermined intervals the unique code digits of articles nominated as missing, and each primary transceiver being provided with means for responding to the transmission of its unique code digits with the radio transmission of those same code digits, the control computer apparatus having means whereby on receipt of those same code digits by the secondary transceiver, the apparatus produces details of the article transmitting those unique code digits.

In accordance with another aspect of the present invention there is provided an electronic system for monitoring a predetermined number of articles, comprising a primary radio transceiver mounted in or otherwise closely associated with each article to be monitored having programmed therein code digits unique to that article; a control computer apparatus separate from the articles arranged to carry details of the articles to be monitored including each set of unique code digits, and being provided with means for storing the unique code digits of articles embraced by the system nominated as stolen, and having associated therewith a secondary transceiver; the primary transceiver including alarm means arranged to actuate the radio transmission of its unique code of digits following actuation of said alarm means, and the control computer apparatus including control means whereby on radio receipt of the unique code digits of an article by the secondary transceiver, the control computer apparatus provides details of the article for operator use to monitor the article; the control computer apparatus and the secondary transceiver including means for radio transmitting at predetermined intervals the unique code digits of articles nominated as missing, and each primary transceiver being provided with means for responding to the transmission of its unique code digits with the radio transmission of those same code digits, the control computer apparatus having means whereby on receipt of those same code digits by the secondary transceiver, the apparatus produces details of the article transmitting those unique code digits.

In accordance with a further aspect of the present invention there is provided a method of monitoring a predetermined number of articles, comprising providing a primary radio transceiver in or otherwise closely associated with each article to be monitored; programming therein code digits unique to that article; providing a control computer apparatus separate from the articles carrying details of the articles to be monitored including each set of unique code digits and having associated therewith a secondary transceiver storing in the master computer apparatus the unique code digits of articles embraced by the system nominated as stolen; providing the primary transceiver with alarm means for actuating the radio transmission of its unique code of digits following actuation of said alarm means, and actuation of the control computer apparatus on radio receipt of the unique code digits of an article by the secondary transceiver from the primary to provide details of the article for operator use to monitor the article; actuating the master computer apparatus and the secondary transceiver to radio transmit at predetermined intervals the unique code digits of articles nominated as missing, and providing a primary transceiver being with means for responding to the transmission of its unique code digits with the radio transmission of those same code digits, the control computer on receipt of those same code digits by the secondary transceiver produces details of the article transmitting those unique code digits.

The area of operation of the system may be increased beyond that provided by the transmitting power of the secondary transceiver, by having remotely located slave transceivers acting as relay stations between the secondary and primary transceivers. These may be line linked, microwave linked or radio linked to the secondary transceiver.

The owner or user of an article may be provided with a transceiver having the capability of direct radio contact from the article transceiver whereby he may himself monitor the security of that article to trigger the primary transceiver for arming and disarming.

The control computer apparatus may incorporate a computer, a monitor and a printer. Records and code digits of articles stolen may be entered manually. Floppy disks may be used for transmission of such information concerning stolen articles to the control equipment of other systems elsewhere, and floppy disks from such other systems may also be used to insert details of missing articles from other locations. Alternatively such information can be transmitted by line or radio.

Means may be provided for ensuring that the computer, via the secondary transceiver, radio transmits at regular intervals the unique code digits of all missing articles in its records.

In order that the invention may be more readily understood, one embodiment thereof will now be described by way of example with reference to the accompanying drawing in which:-

Figure 1 shows in schematic manner one embodiment of an electronic control system according to the invention for monitoring ships and boats in and around a harbour area; and

Figure 2 shows in a schematic manner a second embodiment of an electronic control system according to the invention for monitoring commercial trucks.

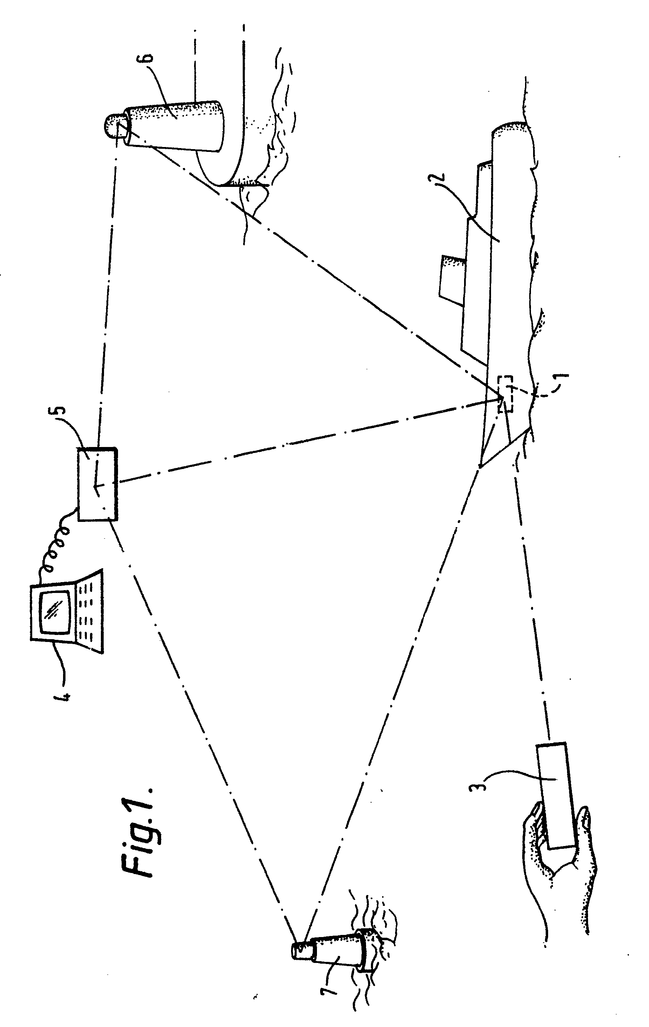

The system illustrated in Figure 1 includes a primary transceiver 1, precoded and installed in each boat 2 to be protected. This transceiver has unique code digits which remains with the boat in perpetuity. It may have a rechargeable backup battery that charges when the boat being protected is in use, or an alkali battery that can, depending on the amount of use, last approximately one year. This primary transceiver can either be fitted at the time of construction of that boat or installed later in a known form of tamperproof box. The transceiver is arranged to be capable of being disarmed by use of a key, keypad or other device. If the boat is used or is attempted to be used by an unauthorised person its primary transceiver will transmit its unique code digits by radio frequency transmission. The primary transceiver will also transmit its unique code digits if it receives an RF transmission of those same digits. The primary transceiver may be coupled to a burglar alarm and/or detectors for heat and/or movement and/or water level and/or flooding for example (not shown).

The system also provides that the boat owner may have a receiver 3 that will receive only the unique code digits of his boat's primary transceiver 1. This receiver may contain a backup battery and/or the ability to plug into power mains. Thus, the owner will have the ability to monitor the security of his own boat whether or not the local system has incorporated records thereof.

The control equipment of the system for the harbour and its surrounding area consists of a desktop computer, monitor and printer 4, into which can be programmed the serial numbers, name, and brief description of all items being protected. In addition the name, address, telephone number and any other relevant information that may be considered necessary, such as serial numbers of engines, radar navigational equipment and so on may also be able to be programmed. The computer 4 is attached to a transceiver and an encoder and decoder 5. When the control computer 4 receives an RF transmitted set of unique code digits it automatically retrieves the records relating to those digits and displays them on the monitor screen and/or prints a hard copy. An operator of the equipment has the ability to enter the records and serial numbers of any boats that have been stolen. This is automatically recorded on floppy discs or other means for onward transmission to the controls of other systems. The computer also has the ability to update its records by the insertion of a floppy disc, to maintain a list of stolen or missing boats from other locations. The computer automatically broadcasts via RF transmission at regular intervals, all serial numbers of missing boats.

Additionally, there is a range of slave transceiver stations 6 and buoys 7 disposed around and outside the harbour that have the ability to receive and transmit whatever information they receive. These are utilised purely to increase the range of effective radio transmission thereby allowing system access to previously "out of range" areas around the harbour.

The system operates from the central control computer 4. As each new boat is admitted on a permanent or overnight basis to the system, a primary transceiver 1 is installed. The number and description details are entered in the computer 4 together with the unchangeable unique code digits. The transceiver 1 may be attached to an existing intruder alarm if required. If the boat is entered or used without the correct disarm code being entered, the onboard transmitter 1 will transmit the code digits: These will cause the central control computer 4 to retrieve the records pertaining to that set of digits. Thus, if the record relating to a particular boat is being displayed by the computer that shows that the relevant boat is being interfered with or operated without the alarm having been disarmed.

The computer 4 also automatically transmits via secondary transceiver 5 the code digits of boats recorded as stolen or missing from the system of other locations. The transceiver 1 aboard each stolen boat will receive a transmission of its own code digits, thereby causing the transceiver to transmit its own code digits back to the central control computer 4. The computer 4 will automatically retrieve the records relating to that boat and display them on its monitor screen. It will then be clear that a boat stolen elsewhere is in the vicinity and that it can be easily identified from the description provided by the computer record.

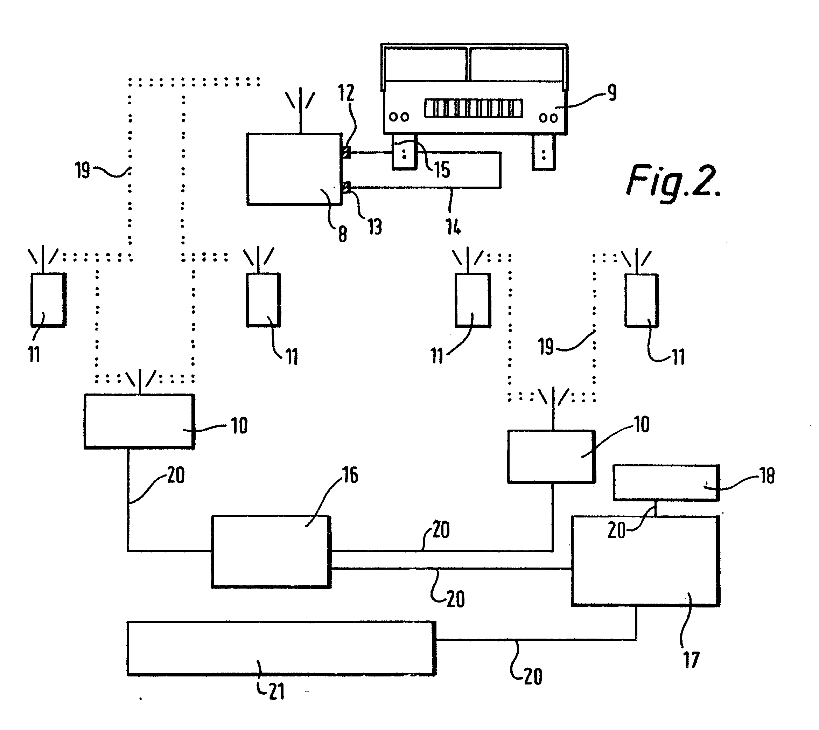

In the arrangement of Figure 2 a system is illustrated for commercial truck protection. In Figure 2 potential radio transmission is shown by dotted lines 19, whilst land line communication is shown by solid line connections 20.

The system includes a primary transceiver unit 8, which in one embodiment is contained in a high density plastic box preferably mounted in a tamper-proof manner in a truck 9. The unit 8 may be capable of supporting external power supplies with a rechargeable back-up battery capable of operation for a multiplicity of days. The primary transceiver unit 8 contains a unique unchangeable code and has inputs for various different alarm types (including tampering or attempted tampering) together with outputs for, for example, an audible alarm (not shown). It may be arranged such that on arming or disarming it radio-reports to a secondary transceiver 10 (hereinafter sometimes referred to as way station) either directly or via a slave transceiver 11. Such arming or disarming may provides details of the time of such action, which alarm inputs are in operation, and additionally may arrange for an automatic self diagnostic routine. The primary transceiver unit may be capable of being armed and disarmed remotely. In practice, as illustrated, two of the alarm inputs 12,13 are for a fibre optic filament 14 which, in the arrangement shown in Figure 2, is connected through a wheel 15 of the truck 9. Such fibre optic filament 14 is advantageous as an alarm member in that it is simple to plug in and disconnect, and cannot, unlike electric cable, be short circuited. It is additionally easily repairable without special equipment, is inexpensive, and in practice produces no false alarms.

The way stations 10 incorporate both secondary transceivers and control computers. Two way stations 10 are illustrated both being land line connected to an area station computer 16, which in turn is connected to a Regional or National computer system 17 having a keyboard 18 for system/record/new client input. Again the Regional or National computer is connected to an International computer 21. It will be observed that two slave transceivers 11 are shown associated with each way. station 10, these being connected thereto either by radio (as shown) or by microwave.

Each way station 10 may comprise a secondary radio transceiver with call storage facility and a back-up battery to prevent loss of memory function. It will have the ability to generate calls to a large number of transceivers and to monitor a similar number. It may also have the ability to detect jamming in any of its frequencies and to transmit a list of trucks nominated as stolen. The secondary computer in each way station is programmed to ensure alarm notification and automatically report to its associated area station 16 should a contact be made, through the unique code numbers being received and transmitted, of a stolen truck.

In a similar way each area station 16 is connected so as to control its associated way stations 10 and to actuate the list of stolen trucks on an area by area basis under the control of a Regional or National centre computer 17. This in turn is responsible for the assimilation of all input data for all records of the system operators and controls the coverage of the areas required for listing stolen trucks.

By way of illustrative example of operation, a truck with a primary transceiver code number of say "100" has an alarm activated by breakage of the fibre optic strand.

A way station receives this transmission and retrieves the records relating to "100" and displays them on the associated monitor screen with a full description of the truck, its owner, and any specified action to be taken. At the same time an alarm tone sounds at the location of the truck alerting on site staff. If the alarm can be dealt with locally, the staff will enter into the primary transducer the appropriate pass word and security code and the way station will thereafter revert to a passive "listening" mode.

If the alarm can not be dealt with locally, as the truck has been stolen, it will be automatically logged each time it passes a way station, whether it stops or not, and therefore the route it is taking, the time and the direction of travel is known as the way stations report their contact and location. The appropriate authorities can then be informed and provided with a full description of the vehicle and personal details of the driver.

Even if the thieves are "professional" enough the change the registration marks of the vehicle, it is still indetifiable by serial numbers, colour, make, size, contents, delivery address for the contents or even something as simple as the driver being able to supply personal details such as his home telephone number.

The invention has been particularly described in relation to boats, and in relation to trucks, but it is to be understood that the invention is equally applicable to British Waterway craft for example, to properties on a specified housing development, particularly such as those of high security risk such as those used for holiday occupation. Again, specific items of equipment such as radars, navigational aids, and cargos of commercial trucks can be protected by the system, again articulated trailers in relation to the haulage industry can be readily protected.

It is to be understood that the foregoing is merely exemplary of electronic control systems in accordance with the invention and that modifications can readily be made thereto without departing from the true scope of the invention. In particular it will be apparent that whilst it has been described in relation particularly to the use of boats and ships, it can be used in relation to a wide range of appropriate articles, items and equipment.

## Claims

1. An electronic system for monitoring a predetermined number of articles, comprising a primary radio transceiver mounted in or otherwise closely associated with each article to be monitored having programmed therein code digits unique to that article; a control computer apparatus separate from the articles arranged to carry details of the articles to be monitored including each set of unique code digits, and being provided with means for storing the unique code digits of articles embraced by the system nominated as stolen, and having associated therewith a secondary transceiver; the control computer apparatus and the secondary transceiver including means for radio transmitting at predetermined intervals the unique code digits of articles nominated as missing, and each primary transceiver being provided with means for responding to the transmission of its unique code digits with the radio transmission of those same code digits, the control computer apparatus having means whereby on receipt of those same code digits by the secondary transceiver, the apparatus produces details of the article transmitting those unique code digits.

2. An electronic system for monitoring a predetermined number of articles, comprising a primary radio transceiver mounted in or otherwise closely associated with each article to be monitored having programmed therein code digits unique to that article; a control computer apparatus separate from the articles arranged to carry details of the articles to be monitored including each set of unique code digits, and being provided with means for storing the unique code digits of articles embraced by the system nominated as stolen, and having associated therewith a secondary transceiver; the primary transceiver including alarm means arranged to actuate the radio transmission of its unique code of digits following actuation of said alarm means, and the control computer apparatus including control means whereby on radio receipt of the unique code digits of an article by the secondary transceiver, the control computer apparatus provides details of the article for operator use to monitor the article; the control computer apparatus and the secondary transceiver including means for radio transmitting at predetermined intervals the unique code digits of articles nominated as missing, and each primary transceiver being provided with means for responding to the transmission of its unique code digits with the radio transmission of those same code digits, the control computer apparatus having means whereby on receipt of those same code digits by the secondary transceiver, the apparatus produces details of the article transmitting those unique code digits.

3. A system as claimed in Claim 1 or 2 incorporating at least one slave transceiver acting as a relay station between the primary and secondary transceiver.

4. A system as claimed in Claims 1, 2 or 3 incorporating a plurality of control computers and an area computer linked thereto for control and monitoring of the plurality of control computers over a predetermined geographical area.

5. A system as claimed in Claim 4 incorporating a plurality of area computers and a regional computer linked thereto for control and monitoring of the plurality of area computers.

6. A system as claimed in any one of the preceding claims wherein the control computer is provided with means for ensuring that the secondary transceiver transmits at intervals the unique code digits of all articles nominated to it as missing.

7. A system as claimed in any one of the preceding claims incorporating a personal transceiver arranged to monitor the security of one article to trigger the arming and disarming of that one article.

8. A method of monitoring a predetermined number of articles, comprising providing a primary radio transceiver in or otherwise closely associated with each article to be monitored; programming therein code digits unique to that article; providing a control computer apparatus separate from the articles carrying details of the articles to be monitored including each set of unique code digits and having associated therewith a secondary transceiver storing in the master computer apparatus the unique code digits of articles embraced by the system nominated as stolen; providing the primary transceiver with alarm means for actuating the radio transmission of its unique code of digits following actuation of said alarm means, and actuation of the control computer apparatus on radio receipt of the unique code digits of an article by the secondary transceiver from the primary to provide details of the article for operator use to monitor the article; actuating the master computer apparatus and the secondary transceiver to radio transmit at predetermined intervals the unique code digits of articles nominated as missing, and providing a primary transceiver being with means for responding to the transmission of its unique code digits with the radio transmission of those same code digits, the control computer on receipt of those same code digits by the secondary transceiver produces details of the article transmitting those unique code digits.

9. A method as claimed in Claim 8 including actuating control computer, via the secondary transceiver, to radio transmit at intervals the unique code digits of all articles nominated to it as missing.

10. A method as claimed in Claim 9 wherein the system incorporates a plurality of control computers and an area computer, including operating the area computer to actuate at least one control computer to transmit the unique code digits of a specified number of nominated missing articles.

Fig.1.

EP 0 426 332 A2

*Fig.2.*